# EUROPÄISCHE PATENTSCHRIFT

(11) **EP 2 166 247 B1**
(45) Veröffentlichungstag und Bekanntmachung des Hinweises auf die Patenterteilung: **16.04.2014**
(21) Anmeldenummer: 09011805.0
(22) Anmeldetag: 16.09.2009
(51) Int. Cl.: F16D 48/06

(54) **Elektromagnetisch betätigbare Kupplung und Verfahren zum Betrieb einer elektromagnetisch betätigbaren Kupplung**
Electromagnetically actuated clutch and method for operating same
Embrayage électromagnétique et procédé de fonctionnement de l'embrayage

(30) Priorität: 18.09.2008 DE 102008047983
(43) Veröffentlichungstag der Anmeldung: 24.03.2010
(73) Patentinhaber: LICOS Trucktec GmbH, 88677 Markdorf (DE)
(72) Erfinder: Krafft, Rainer, Dr., 88633 Heiligenberg (DE); Ganahl, Johannes, 88677 Markdorf (DE)
(74) Vertreter: Dobler, Markus

(56) Entgegenhaltungen:
- DE-A1- 3 828 707
- DE-A1- 4 104 538
- DE-A1- 10 309 548
- DE-A1- 19 854 224
- US-A- 6 161 671
- US-A1- 2002 167 777
- US-A1- 2006 232 100
- US-A1- 2007 170 029

## Beschreibung

Die Erfindung betrifft eine elektromagnetisch betätigbare Reibscheibenkupplung nach dem Oberbegriff des Patentanspruchs 1 und ein Verfahren zum Betrieb einer elektromagnetisch betätigbaren Kupplung nach dem Oberbegriff des Patentanspruchs 9.

### Stand der Technik:

Reibscheibenkupplungen sind regelmäßig zwischen einem Fahrzeugmotor und einem anzutreibenden Aggregat angeordnet, um das Aggregat zu- und abschalten zu können.

Dabei ist der Elektromagnet einer herkömmlichen Kupplung üblicherweise auf die vorhandene Bordspannung des Fahrzeugs ausgelegt.

In der Druckschrift DE 10 309 548 B1 wird eine elektromagnetisch betätigbare Reibscheibenkupplung und ein Verfahren zum Betrieb einer elektromagnetisch betätigbaren Reibscheibenkupplung gezeigt, insbesondere für das Zu- und Abschalten von Aggregaten in Fahrzeugen, die wenigstens eine Spule aufweist, einen Rotor, eine Ankerscheibe, die über die Magnetkraft des Elektromagneten zum Zuschalten der Kupplung gegen den Rotor gezogen werden kann und Steuermittel umfasst. Die Steuermittel und der Elektromagnet sind im Zusammenspiel zur zumindest kurzfristigen Erhöhung der vom Elektromagneten erzeugten magnetischen Flussdichte im Vergleich zu einer mittleren magnetischen Flussdichte für eine Betriebsphase mit dauerhaft zugeschalteter Kupplung im Bereich der Ankerscheibe ausgebildet.

Um die die Flussdichte zu erhöhen, wird in der vorbenannten Druckschrift der Elektromagnet in der Einschaltphase kurzfristig mit einer Spannung beaufschlagt, welche über der vorhandenen Bordspannung des Fahrzeugs liegt.

Dadurch wird die Magnetkraft derart erhöht, dass die Ankerscheibe innerhalb einer kurzen Zeit an den Rotor gezogen wird.

Ist die Kupplung zugeschaltet, wird die Versorgungsspannung des Elektromagneten auf die vorhandene Bordspannung des Fahrzeugs abgesenkt.

Diese kurzfristige Spannungserhöhung erfordert einen zusätzlichen Schaltungsaufwand durch zusätzliche Mittel, die eine Spannungserhöhung ausführen können.

DE 4 104 538 A1 offenbart eine Kupplung nach dem Oberbegriff des Anspruchs 1.

Der Erfindung liegt die Aufgabe zugrunde, ein Abschalten der Kupplung durch Spannungschwankungen der Bordspannung zu vermeiden.

Diese Aufgabe wird durch die Merkmale des Anspruchs 1 sowie des Anspruchs 9 gelöst.

In den abhängigen Ansprüchen sind vorteilhafte und zweckmäßige Weiterbildungen der Erfindung angegeben.

Zunächst geht die Erfindung von einer elektromagnetisch betätigbaren Kupplung, insbesondere einer Reibscheibenkupplung aus, zum Zu- und Abschalten von Aggregaten, beispielsweise einer Wasserpumpe, in einem Fahrzeug, insbesondere Kraftfahrzeug, mit einer vorhandenen Bordspannung, wobei die Kupplung einen Elektromagneten mit mindestens einer Spule, einen Rotor, eine Ankerscheibe, die zum Zuschalten der Kupplung über die Kräfte des Elektromagneten gegen den Rotor gezogen wird und Steuermittel umfasst.

Der Kern der Erfindung liegt darin, dass die Steuermittel im Hinblick auf einen Dauerbetriebszustand für ein Betriebsspannungsniveau ausgelegt sind, das kleiner als die vorhandene Bordspannung des Fahrzeugs ist, wobei die Steuermittel geeignet sind, den Elektromagneten mit einem Spannungsniveau für ein Zuschalten der Reibscheibenkupplung zu schalten, welches größer ist als das Betriebsspannungsniveau, und mittels Taktung einer Versorgungsspannung für eine Betriebsphase mit dauerhaft geschalteter Kupplung auf das ausgelegte Betriebsspannungsniveau zu senken.

Durch eine Taktung kann die Versorgungsspannung für den Elektromagneten zeitweise ein- und ausgeschaltet werden.

Es stellt sich eine mittlere Betriebsspannung auf der Grundlage einer Versorgungsspannung für einen Elektromagneten ein, wobei unterschiedliche Betriebsspannungsniveaus mit verschiedenen Taktungen vorgegeben werden können.

Erfindungsgemäß kann die Versorgungsspannung des Elektromagneten im Bereich zwischen der vorhandenen Bordspannung des Fahrzeugs und der angestrebten Betriebsspannung für eine dauerhaft geschaltete Kupplung liegen. Auf dem angestrebten Betriebsspannungsniveau ist die Kupplung für einen Dauerbetrieb ausgelegt.

Durch diese Vorgehensweise wird die Kupplung beim Zuschalten zeitweise mit einer Versorgungsspannung beaufschlagt, die größer als das dauerhafte Betriebsspannungsniveau ist und kurzzeitig in etwa der Bordspannung im Fahrzeug entsprechen kann.

Damit wird das Zuschalten der Reibscheibenkupplung auch dann noch möglich, wenn ein Verschleißspalt eine solche Größe erreicht hat, für welchen das Betriebsspannungsniveau für einen Dauerbetriebszustand nicht mehr ausreichen würde.

Hierzu lassen sich die Zuschaltbereiche der Versorgungsspannung einfach vergrößern oder die

Versorgungsspannung wird kurzfristig ungetaktet an den Elektromagneten angelegt.

Damit stellt sich ein Spannungsniveau ein, welches über dem Betriebsspannungsniveau liegt, ohne dass eine Spannung zur Verfügung gestellt werden muss, die höher ist als die Bordspannung.

Eine Erhöhung des Spannungsniveaus zum Zuschalten bildet Magnetkräfte aus, die ein Zuschalten einer elektromagnetisch betätigbaren Reibscheibenkupplung mit einem vergleichsweise großen Verschleiß auch innerhalb einer kurzen Zeit gewährleisten können.

Des Weiteren kann ein Wartungsintervall einer Reibscheibenkupplung vergrößert werden, da eine Erhöhung des Spannungsniveaus zum Zuschalten im Einschaltpunkt ausreichend große Magnetkräfte zum Zuschalten einer Kupplung auch bei großem Verschleißspalt bildet.

In einer bevorzugten Ausgestaltung der Erfindung ist es vorgesehen, dass die Versorgungsspannung des Elektromagneten im Einschaltpunkt der vorhandenen Bordspannung des Fahrzeugs entspricht.

In diesem einfachen Fall wird die Bordspannung einfach an die Ansteuerelektronik gelegt.

Außerdem kann der Elektromagnet eine Magnetkraft erzeugen, um eine Ankerscheibe auch über eine durch Verschleiß auftretende, vergleichsweise große Distanz gegen den Rotor zu ziehen, da die Bordspannung vorzugsweise deutlich über dem Betriebsspannungsniveau liegen wird.

In einer besonders bevorzugten Ausgestaltung der Erfindung ist vorgesehen, dass die Taktung der Versorgungsspannung mittels einer Pulsweitenmodulation [PWM] durchführbar ist.

Dabei kann die Versorgungsspannung auf ein gewünschtes Betriebsspannungsniveau durch Verändern der Pulsbreite des Pulsweitenmodulationsignals ausgelegt werden.

Eine Pulsweitenmodulation kann gegebenenfalls durch bereits vorhandene Steuermittel in einem Fahrzeug ausgeführt werden, wodurch ein zusätzlicher Schaltungsaufwand nicht erforderlich ist.

Mit einer Pulsweitenmodulation ist das Betriebsspannungsniveau durch ein bewährtes Regelverfahren ständig an sich ändernde, äußere Bedingungen anpassbar.

Dadurch können Spannungsschwankungen in der vorhandenen Bordspannung nahezu vernachlässigt werden, da durch die Pulsweitenmodulation eine sofortige Nachregelung der Versorgungsspannung durchgeführt werden kann.

In einer überdies bevorzugten Ausgestaltung der Erfindung ist es vorgesehen, dass die Steuermittel eine Absenkung auf ein Betriebsspannungsniveau vornehmen, dass im Bereich der halben, vorhandenen Bordspannung des Fahrzeugs liegt.

Vorzugsweise wird der Elektromagnet auf ein entsprechendes Betriebsspannungsniveau ausgelegt, insbesondere auch für den Dauerbetrieb, die zum Beispiel in etwa der halben, vorhandenen Bordspannung des Fahrzeugs entspricht.

In einer weiteren, bevorzugten Ausgestaltung der Erfindung ist vorgesehen, dass die Steuermittel das Absenken auf ein Betriebsspannungsniveau mittels eines PulsweitenmodulationSignals mit vorgegebener Periodendauer vornehmen.

In einer überdies bevorzugten Ausgestaltung der Erfindung ist vorgesehen, dass die Steuermittel geeignet sind, eine Pulsbreite bei einer sich ändernden Bordspannung vorzugeben, die für eine dauerhafte Betriebsphase der Kupplung erforderlich ist.

Durch eine Nachregelung der Pulsbreite lässt sich ein vorzeitiges Abschalten der Kupplung durch eventuelle Unterspannung bzw. durch Spannungsschwankungen im vorhandenen Bordnetz vermeiden.

In einer weiteren, bevorzugten Ausgestaltung der Erfindung ist es vorgesehen, dass die Steuermittel als Nachrüsteinheit ausgebildet sind.

Durch eine Nachrüsteinheit lassen sich bestehende elektromagnetisch betätigbare Reibscheibenkupplungen zum Beispiel mittels eines Adapters erfindungsgemäß mit einer Taktung betreiben.

Dies ist ein besonderer Vorteil, wenn zur Durchführung einer Pulsweitenmodulation ein Zugriff auf bereits vorhandene Steuermittel mit Pulsweitenmodulation möglich ist.

Das nachgerüstete Steuermittel gewährleistet eine Absenkung des Spannungsniveaus des Elektromagneten für einen Dauerbetrieb.

Darüber hinaus ist es denkbar, einen Austausch eines herkömmlichen Elektromagneten durch einen Elektromagneten mit der Auslegung auf ein vermindertes Betriebsspannungsniveau vorzunehmen.
Dieser Elektromagnet kann dann mit einer Pulsweitenmodulation eines bereits vorhandenen Steuermittels oder eines nachgerüsteten Steuermittels gesteuert werden.

Ein weiterer Aspekt der Erfindung wird darin gesehen, ein Verfahren zum Betrieb einer elektromagnetisch betätigbaren Kupplung nach dem Oberbegriff des Anspruches 1 zur Verfügung zu stellen.

Der Kern des erfindungsgemäßen Verfahrens liegt darin, dass die Steuermittel die Versorgungsspannung eines Elektromagneten mittels einer Taktung auf ein Betriebsspannungsniveau für eine Betriebsphase einer dauerhaft geschalteten Kupplung absenken, die kleiner als die vorhandene Bordspannung des Fahrzeugs ist, wobei die Steuermittel eine Versorgungsspannung für ein Zuschalten der Reibscheibenkupplung vorsehen, welche größer ist als das Betriebsspannungsniveau.

Durch das Betreiben eines Elektromagneten auf einem geregelten Betriebsspannungsniveau kann die erfindungsgemäße Reibscheibenkupplung im Vergleich zu einer Reibscheibenkupplung, die lediglich an einer Bordspannung betrieben wird, kleiner dimensioniert werden, da die Kupplung nicht für den Fall einer Unterspannung noch funktionieren muss.

Es muss keine überdimensionierte Auslegung einer Kupplung erfolgen, um einen Betrieb bei kleineren Spannungen als bei der Spannung für einen Dauerbetrieb zu gewährleisten.

### Zeichnungen:

Weitere Vorteile und Einzelheiten gehen aus den dargestellten Zeichnungen hervor und werden nachstehend näher erläutert.

### Es zeigen:

- Figur 1: einen bekannten Spannungsverlauf einer elektromagnetisch schaltbaren Kupplung mit einem Betriebsspannungsniveau bei Bordspannung;
- Figur 2: einen erfindungsgemäßen Spannungsverlauf einer elektromagnetisch schaltbaren Kupplung mit einer Pulsweitenmodulation.

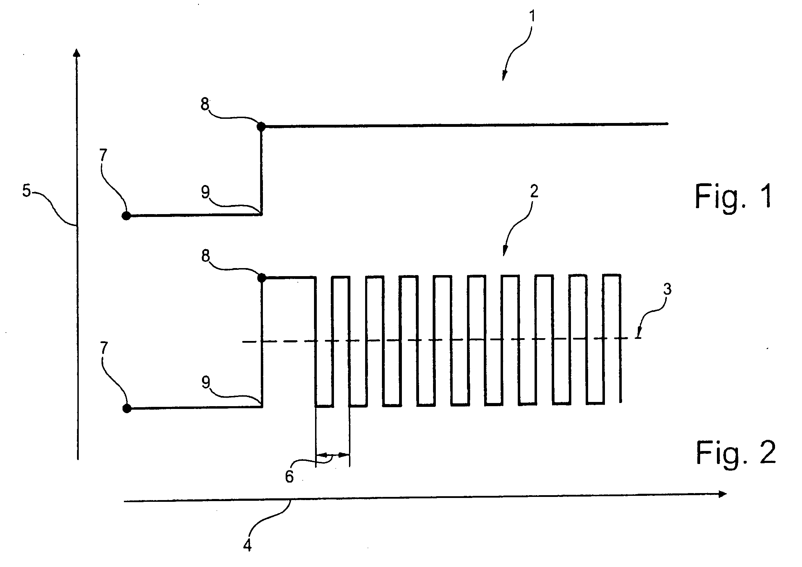

In Figur 1 ist ein Spannungsverlauf 1 einer elektromagnetisch betätigbaren Reibscheibenkupplung gezeigt, wobei die Spannung auf der Spannungsachse 5 und der zeitliche Verlauf der

Spannung auf einer Zeitachse 4 dargestellt ist.

Mit dem Bezugszeichen 7 ist beispielsweise eine Spannung bei null Volt gekennzeichnet, die an einem Elektromagneten einer Kupplung in ihrem nicht zugeschalteten Zustand der Ankerscheibe anliegt.

In einem Einschaltpunkt 9 wird der Elektromagnet der Kupplung mit einer Versorgungsspannung beaufschlagt, die bei herkömmlichen Kupplungen der vorhandenen Bordspannung 8 eines Fahrzeugs entspricht.

Die Versorgungsspannung des Elektromagneten wird in Figur 1 in bekannter Weise nach dem Zuschalten der Kupplung über den gesamten Zeitverlauf konstant auf der vorhandenen Bordspannung 8 (z.B. 24 Volt) gehalten, um eine ausreichende Magnetkraft für einen Dauerbetrieb bereit zu stellen.

Beim Abschalten der Versorgungsspannung werden die Magnetkräfte für den Elektromagneten aufgehoben und die Ankerscheibe entfernt sich vom Rotor, und steht zum Beispiel bei einer Versorgungsspannung bei 0 Volt außer Eingriff mit diesem.

In Figur 2 ist ein erfindungsgemäßer Spannungsverlauf 2 einer elektromagnetisch betätigbaren Reibscheibenkupplung gezeigt, wobei die Versorgungsspannung für den Elektromagneten von einer Spannung 7 (O Volt) ausgeht.

Im Einschaltpunkt 9 wird der Elektromagnet mit einer Versorgungsspannung beaufschlagt, die kurzzeitig in etwa der vorhandenen Bordspannung 8 des Fahrzeugs entspricht.

Die kurzfristig erhöhte Versorgungsspannung für den Elektromagneten kann im Bereich zwischen einem Betriebsspannungsniveau 3 und der vorhandenen Bordspannung 8 liegen und wird über eine erforderliche Zeitdauer gehalten, um

eine ausreichende Magnetkraft zum Anziehen der Ankerscheibe gegen den Rotor zu erzeugen.

Durch eine anschließende Taktung, durch beispielsweise eine Pulsweitenmodulation, wird die Versorgungsspannung auf das Betriebsspannungsniveau 3 abgesenkt, wobei die Taktung innerhalb einer konstanten Periodendauer 6 statt findet.

Die Versorgungsspannung des Elektromagneten kann nach dem Zuschalten der Kupplung auf ein Betriebsspannungsniveau 3 abgesenkt werden, für welches der Elektromagnet für eine Betriebsphase mit einer dauerhaft geschalteten Kupplung ausgelegt ist.

Die Steuermittel sind dazu ausgelegt, eine Pulsbreite vorzugeben, die eine mittlere Versorgungsspannung für eine dauerhafte Betriebsphase einer Kupplung ausbilden.

Es wird eine mittlere Versorgungsspannung eingeregelt, die auf einem Betriebsspannungsniveau 3 liegt, welches ein Abschalten der Kupplung gerade vermeidet und somit als "optimiertes" Betriebsspannungsniveau bezeichenbar ist.

Bei Spannungsschwankungen der Bordspannung 8 sehen die Steuermittel eine Nachregelung der Pulsbreite entsprechend den Schwankungen vor, um ein vorzeitiges Abschalten der Kupplung zu vermeiden.

### Bezugszeichenliste:

- 1: Spannungsverlauf für eine bekannte elektromagnetisch schaltbare Reibenscheibenkupplung
- 2: Spannungsverlauf für eine elektromagnetisch schaltbare Reibscheibenkupplung bei pulsweitenmodulierter Versorgungsspannung
- 3: Betriebsspannungsniveau
- 4: Zeitachse
- 5: Spannungsachse
- 6: Periodendauer
- 7: Spannung (0 Volt)
- 8: Bordspannung (z.B. 24 V)
- 9: Einschaltpunkt

## Patentansprüche

1. Elektromagnetisch betätigbare Reibscheibenkupplung zum Zu- und Abschalten von Aggregaten beispielweise einer Wasserpumpe in einem Fahrzeug, insbesondere in einem Kraftfahrzeug, mit einer vorgegebenen Bordspannung, wobei die Kupplung einen Elektromagneten mit mindestens einer Spule, einen Rotor, eine Ankerscheibe, die zum Zuschalten der Kupplung über die Magnetkräfte des Elektromagneten gegen den Rotor gezogen wird, und Steuermittel umfasst, wobei die Steuermittel im Hinblick auf einen Dauerbetriebszustand für ein Betriebsspannungsniveau (3) ausgelegt sind, das kleiner als die vorhandene Bordspannung (8) des Fahrzeugs ist, wobei die Steuermittel geeignet sind, den Elektromagneten mit einem Spannungsniveau für ein Zuschalten der Reibscheibenkupplung zu schalten, welches größer ist als das Betriebsspannungsniveau (3), und mittels Taktung einer Versorgungsspannung für eine Betriebsphase mit dauerhaft geschalteter Kupplung auf das ausgelegte Betriebsspannungsniveau (3) zu senken, **dadurch gekennzeichnet, dass** eine mittlere Versorgungsspannung eingeregelt wird, die auf einem Betriebsspannungsniveau liegt, welches ein Abschalten der Kupplung gerade vermeidet, wobei die Steuermittel bei Spannungsschwankungen der Bordspannung eine Nachregelung der Pulsbreite entsprechend den Schwankungen vorsehen, um ein vorzeitiges Abschalten der Kupplung zu vermeiden.

2. Elektromagnetische Kupplung nach Anspruch 1, **dadurch gekennzeichnet, dass** die Versorgungsspannung des Elektromagneten im Einschaltpunkt (9) der vorhandenen Bordspannung (8) des Fahrzeuges entspricht.

3. Elektromagnetische Kupplung nach einem der vorhergehenden Ansprüche, **dadurch gekennzeichnet, dass** die Taktung der Versorgungsspannung mittels einer Pulsweitenmodulation [PWM] durchführbar ist.

4. Elektromagnetische Kupplung nach einem der vorhergehenden Ansprüche, **dadurch gekennzeichnet, dass** die Steuermittel eine Absenkung auf ein Betriebsspannungsniveau (3) vornehmen, das im Bereich der halben Bordspannung (8) des Fahrzeugs liegt.

5. Elektromagnetische Kupplung nach einem der vorhergehenden Ansprüche, **dadurch gekennzeichnet, dass** die Steuermittel das Absenken auf ein Betriebsspannungsniveau (3) mittels eines Pulsweitenmodulation (PWM) - Signals mit vorgegebener Periodendauer (6) vornehmen.

6. Elektromagnetische Kupplung nach einem der vorhergehenden Ansprüche, **dadurch gekennzeichnet, dass** die Steuermittel dazu ausgelegt sind, eine Nachregelung einer Pulsbreite des PWM-Signals in Abhängigkeit der aktuellen Bordspannung (8) vorzunehmen.

7. Elektromagnetische Kupplung nach einem der vorhergehenden Ansprüche, **dadurch gekennzeichnet, dass** die Steuermittel geeignet sind, eine Pulsbreite bei einer sich ändernden Bordspannung (8) vorzugeben, die für eine dauerhafte Betriebsphase der Kupplung erforderlich ist.

8. Elektromagnetische Kupplung nach einem der vorhergehenden Ansprüche, **dadurch gekennzeichnet, dass** die Steuermittel als Nachrüsteinheit ausgebildet sind.

9. Verfahren zum Betrieb einer elektromagnetischen Kupplung nach einem der vorhergehenden Ansprüche 1 bis 8, **dadurch gekennzeichnet, dass** die Steuermittel die Versorgungsspannung für den Elektromagneten mittels einer Taktung auf ein Betriebsspannungsniveau (3) für eine Betriebsphase mit dauerhaft geschalteter Kupplung absenken, wobei das Betriebsspannungsniveau (3) kleiner als die vorhandene Bordspannung (8) eines Kraftfahrzeuges ist.

## Claims

1. Electromagnetically operated friction clutch for switching on and off units, for example a water pump, in a vehicle, in particular a motor vehicle, with a predefined system voltage, wherein the clutch comprises an electromagnet with at least one coil, a rotor, and an armature disc, which is drawn against the rotor by the magnetic forces of the electromagnet for connecting the clutch, and control means, wherein the control means are configured with respect to a continuous operating state for an operating voltage level (3) which is lower than the available system voltage (8) of the vehicle, wherein the control means are suitable for connecting the electromagnet at a voltage level for engaging the friction clutch that is greater than the operating voltage level (3), and for reducing by timing a supply voltage for an operating phase when the clutch is continuously engaged to the configured operating voltage level (3), **characterised in that** a median supply voltage is adjusted which is at an operating voltage level which specifically avoids disconnecting the clutch, wherein the control means in case of fluctuations in the voltage of the supply voltage readjust the pulse width according to the fluctuations in order to avoid a premature disconnection of the clutch.

2. Electromagnetic clutch according to claim 1, **characterised in that** the supply voltage of the electromagnet at the switch-on point (9) corresponds to the available system voltage (8) of the vehicle.

3. Electromagnetic clutch according to one of the preceding claims, **characterised in that** the timing of the supply voltage can be implemented by means of pulse width modulation (PWM).

4. Electromagnetic clutch according to one of the preceding claims, **characterised in that** the control means reduce the voltage to an operating voltage level (3) which is in the region of half the system voltage (8) of the vehicle.

5. Electromagnetic clutch according to one of the preceding claims, **characterised in that** the control means reduce the voltage to an operating voltage level (3) by means of a pulse width modulation (PWM) signal with predefined cycle duration (6).

6. Electromagnetic clutch according to one of the preceding claims, **characterised in that** the control means are configured to readjust a pulse width of the PWM signal as a function of the prevailing system voltage (8).

7. Electromagnetic clutch according to one of the preceding claims, **characterised in that** the control means are suitable for defining a pulse width with a varying system voltage (8), which is required for a continuous operating phase of the clutch.

8. Electromagnetic clutch according to one of the preceding claims, **characterised in that** the control means are in the form of a retrofitted unit.

9. Method for operating an electromagnetic clutch according to one of the preceding claims 1 to 8, **characterised in that** the control means reduce the supply voltage for the electromagnet by means of timing to an operating voltage level (3) for an operating phase with a permanently connected clutch, wherein the operating voltage level (3) is lower than the available system voltage (8) of a motor vehicle.

## Revendications

1. Embrayage à friction à actionnement électromagnétique permettant d'embrayer et de débrayer des groupes dans un véhicule, par exemple une pompe à eau, en particulier dans un véhicule automobile, avec une tension de bord prédéterminée, l'embrayage comprenant
un électroaimant pourvu d'au moins une bobine,
un rotor,
un disque d'armature qui, pour embrayer l'embrayage, est tiré contre le rotor par les forces magnétiques de l'électroaimant, et
des moyens de commande,
lesdits moyens de commande étant conçus, en vue d'un état de fonctionnement permanent, pour un niveau de tension de fonctionnement (3) inférieur à la tension de bord (8) présente du véhicule,
les moyens de commande étant aptes, afin d'embrayer l'embrayage à friction, à commander l'électroaimant avec un niveau de tension supérieur au niveau de tension de fonctionnement (3), et, pour une phase de fonctionnement avec l'embrayage embrayé en permanence, à faire baisser le niveau de tension jusqu'au niveau de tension de fonctionnement (3) prévu au moyen du cadencement d'une tension d'alimentation,
**caractérisé en ce qu'**une tension d'alimentation moyenne est réglée, laquelle se situe à un niveau de tension de fonctionnement permettant tout juste d'éviter un désembrayage de l'embrayage, les moyens de commande, en cas de variations de tension de la tension de bord, prévoyant un réajustement de la durée d'impulsion en fonction des variations, afin d'éviter un débrayage prématuré de l'embrayage.

2. Embrayage électromagnétique selon la revendication 1, **caractérisé en ce que** la tension d'alimentation de l'électroaimant au point d'enclenchement (9) correspond à la tension de bord (8) présente du véhicule.

3. Embrayage électromagnétique selon l'une des revendications précédentes, **caractérisé en ce que** le cadencement de la tension d'alimentation peut être mis en oeuvre au moyen d'une modulation de largeur d'impulsions (MLI).

4. Embrayage électromagnétique selon l'une des revendications précédentes, **caractérisé en ce que** les moyens de commande procèdent à un abaissement jusqu'à un niveau de tension de fonctionnement (3) qui se situe dans le domaine de la moitié de la tension de bord (8) du véhicule.

5. Embrayage électromagnétique selon l'une des revendications précédentes, **caractérisé en ce que** les moyens de command procèdent à l'abaissement jusqu'à un niveau de tension de fonctionnement (3) au moyen d'un signal de modulation de largeur d'impulsions (MLI) avec une durée de période prédéterminée (6).

6. Embrayage électromagnétique selon l'une des revendications précédentes, **caractérisé en ce que** les moyens de commande sont prévus pour procéder à un réajustement d'une largeur d'impulsions du signal MLI en fonction de la tension de bord (8) actuelle.

7. Embrayage électromagnétique selon l'une des revendications précédentes, **caractérisé en ce que** les moyens de commande sont aptes en cas de tension de bord (8) variable à imposer une largeur d'impulsions, laquelle est nécessaire pour une phase de fonctionnement permanent de l'embrayage.

8. Embrayage électromagnétique selon l'une des revendications précédentes, **caractérisé en ce que** les moyens de commande sont réalisés sous la forme d'une unité de complément d'équipement.

9. Procédé pour faire fonctionner un embrayage électromagnétique selon l'une des revendications 1 à 8, **caractérisé en ce que** les moyens de commande diminuent la tension d'alimentation pour l'électroaimant au moyen d'un cadencement jusqu'à un niveau de tension de fonctionnement (3) pour une phase de fonctionnement avec l'embrayage embrayé en permanence, le niveau de tension de fonctionnement (3) étant inférieur à la tension de bord (8) présente d'un véhicule automobile.
